# EUROPEAN PATENT APPLICATION

(11) **EP 3 056 715 A1**
(43) Date of publication of application: **17.08.2016**
(21) Application number: 16154136.2
(22) Date of filing: 03.02.2016
(51) Int. Cl.: F02C 7/143, F02C 9/18, F04D 29/58

(54) **SYSTEMS AND METHODS FOR CONTROLLING AN INLET AIR TEMPERATURE OF AN INTERCOOLELD GAS TURBINE ENGINE**

(30) Priority: 13.02.2015 US 201514622043
(71) Applicant: General Electric Company, Schenectady, NY 12345 (US)
(72) Inventor: SCARBORO, Paul Roberts, Houston, TX Texas 77015 (US); HARRIS, Joseph Gabriel, Houston, TX Texas 77015-6594 (US)
(74) Representative: Lee, Brenda

(57) **Abstract**

An intercooled gas turbine engine (100) may include a low pressure compressor (132) configured to produce a compressed flow of air (134), an intercooler (138), a first air line (140) positioned between the low pressure compressor (132) and the intercooler (138) and configured to direct a first portion of the compressed flow of air (134) to the intercooler (138), a high pressure compressor (104), a second air line positioned between the intercooler (138) and the high pressure compressor (104) and configured to direct the first portion of the compressed flow of air (134) toward the high pressure compressor (104), and a bypass air line (204,206) positioned between the low pressure compressor (132) and the high pressure compressor (104) and configured to direct a second portion of the compressed flow of air (134) to the second air line (112). A related method of controlling a temperature of an incoming flow of air (108) supplied to a core engine (130) of an intercooled gas turbine engine (100) also is provided.

## Description

### TECHNICAL FIELD

The present application and the resultant patent relate generally to gas turbine engines and more particularly relate to systems and methods for controlling an inlet air temperature of an intercooled gas turbine engine.

### BACKGROUND OF THE INVENTION

Generally, an intercooled gas turbine engine may include a high pressure compressor for compressing an incoming flow of air, a combustor for mixing the compressed flow of air with a pressurized flow of fuel and igniting the mixture to create a flow of combustion gases, and a high pressure turbine for producing mechanical work as the flow of combustion gases passes therethrough. The high pressure compressor, the combustor, and the high pressure turbine may collectively be referred to as the "core engine." In some applications, an intercooled gas turbine engine also may include a low pressure compressor, which alternatively may be referred to as a "booster," for supplying compressed air to the high pressure compressor for further compression therein.

It is well known that the operating characteristics of a gas turbine engine may be affected by the ambient temperature of the operating environment, which determines the temperature of the incoming flow of air supplied to the core engine. In particular, when the ambient temperature is relatively low, the core engine may operate to output a high shaft horse power (SHP) while the core engine temperature is maintained at an acceptable level. However, when the ambient temperature is relatively high, the core engine temperature may reach an unacceptably high level if a high SHP is being delivered.

To satisfy a demand for outputting a high SHP even when the ambient temperature is relatively high, a cooling system may be utilized, particularly on hotter days, to cool the incoming flow of air supplied to the core engine. In this manner, the cooling system may increase the range of ambient temperature in which the gas turbine engine may deliver maximum power while operating within emissions limits. As an example, the cooling system may include an intercooler for cooling air received from the low pressure compressor and supplying the cooled air to the high pressure compressor. Intercooled gas turbine engines may benefit from a power increase across all ambient temperatures. Some intercooled gas turbine engines may not include any means for controlling the temperature of the cooled air, and thus a certain variation in the cooled air temperature may be inevitable as the ambient temperature changes.

Other intercooled gas turbine engines may control the temperature of the cooled air supplied to the core engine by manipulating the temperature of the cooling fluid, such as water, entering the intercooler. Although this indirect control method may be effective in some applications, it presents certain undesirable drawbacks. For example, manipulation of the cooling fluid entry temperature may require significant recirculation of hot fluid back through the inlet of the intercooler to increase the product air temperature when required. Additionally, the amount of recirculation required for fast start-up may increase the cost of the intercooler system. Furthermore, indirectly controlling the cooled air temperature by manipulating the cooling fluid entry temperature is an inherently slow control method due to the lag time between cooled air temperature measurement, cooling fluid temperature change, intercooler equilibrium, and cooled air temperature change.

There is thus a desire for improved systems and methods for controlling an inlet air temperature of an intercooled gas turbine engine. Such improved systems and methods may provide fast, accurate, and low-cost control of the temperature of the cooled air supplied to the core engine. In particular, as compared to existing systems and methods involving manipulation of the temperature of the cooling fluid entering the intercooler, such improved systems and methods may reduce product cost as well as start-up times.

### SUMMARY OF THE INVENTION

The present application and the resultant patent provide an intercooled gas turbine engine. The intercooled gas turbine engine may include a low pressure compressor configured to produce a compressed flow of air, an intercooler, a low pressure compressor configured to produce a compressed flow of air, a high pressure compressor, a second air line positioned between the intercooler and the high pressure compressor and configured to direct the first portion of the compressed flow of air toward the high pressure compressor, and a bypass air line positioned between the low pressure compressor and the high pressure compressor and configured to direct a second portion of the compressed flow of air to the second air line.

The present application and the resultant patent also provide a method of controlling a temperature of an incoming flow of air supplied to a core engine of an intercooled gas turbine engine. The method may include the steps of producing a compressed flow of air with a low pressure compressor, directing a first portion of the compressed flow of air to an intercooler for cooling therein, bypassing a second portion of the compressed flow of air around the intercooler, mixing the first portion of the compressed flow of air and the second portion of the compressed flow of air downstream of the intercooler to form the incoming flow of air, and directing the incoming flow of air to the core engine.

The present application and the resultant patent further provide an intercooled gas turbine engine. The intercooled gas turbine engine may include a low pressure compressor configured to produce a compressed flow of air, an intercooler, a low pressure compressor configured to produce a compressed flow of air, a high pressure compressor, a second air line positioned between the intercooler and the high pressure compressor and configured to direct the first portion of the compressed flow of air toward the high pressure compressor, a bypass air line positioned between the low pressure compressor and the high pressure compressor and configured to direct a second portion of the compressed flow of air to the second air line, a combustor in communication with the high pressure compressor, and a high pressure turbine in communication with the combustor.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

FIG. 1 is a schematic diagram of a known gas turbine engine including a low pressure compressor, an intercooler, a high pressure compressor, a combustor, a high pressure turbine, and a low pressure turbine.
FIG. 2 is a schematic diagram of a gas turbine engine as may be described herein, the gas turbine engine including a low pressure compressor, an intercooler, an air bypass line, a high pressure compressor, a combustor, a high pressure turbine, and a low pressure turbine.

### DETAILED DESCRIPTION

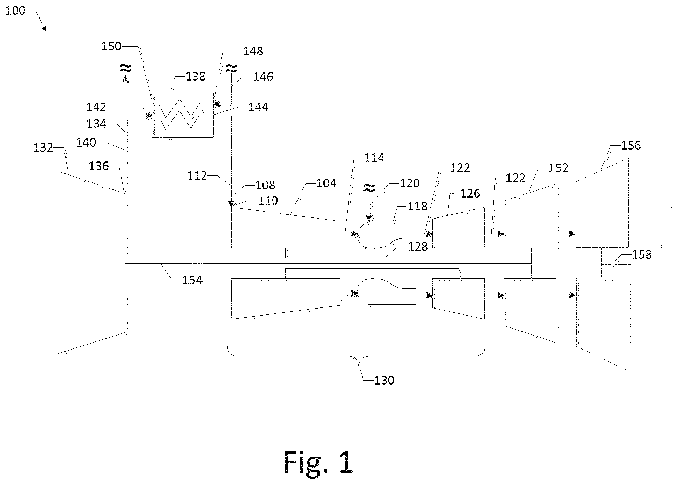

Referring now to the drawings, in which like numerals refer to like elements throughout the several views, FIG. 1 shows a schematic diagram of a known gas turbine engine 100. The gas turbine engine 100 may include a high pressure compressor 104 for compressing an incoming flow of air 108 received via an air inlet 110 of the high pressure compressor 104. The incoming flow of air 108 may be supplied to the high pressure compressor 104 via an air inlet line 112 extending to the air inlet 110. The high pressure compressor 104 produces a compressed flow of air 114 (at a high pressure), which may be delivered to a combustor 118 of the gas turbine engine 100. The combustor 118 mixes the compressed flow of air 114 with a pressurized flow of fuel 120 and ignites the mixture to create a flow of combustion gases 122. Although only a single combustor 118 is shown, the gas turbine engine 100 may include any number of combustors 118, which may be arranged in an annular array about a longitudinal axis of the gas turbine engine 100. The gas turbine engine 100 also may include a high pressure turbine 126 that receives the flow of combustion gases 122 from the combustor 118. The flow of combustion gases 122 drives the high pressure turbine 126 so as to produce mechanical work, which may drive the high pressure compressor 104 via a first shaft or high pressure rotor 128. The mechanical work produced by the high pressure turbine 126 also may drive an external load (not shown), such as an electrical generator and the like, via the high pressure rotor 128. The high pressure compressor 104, the combustor 118, and the high pressure turbine 126 may collectively form a core engine 130 of the gas turbine engine 100, and the air inlet 110 of the high pressure compressor 104 may be the air inlet of the core engine 130.

As is shown in FIG. 1, the gas turbine engine 100 also may include a low pressure compressor 132 for producing a compressed flow of air 134 (at a low pressure), which may be delivered from an air outlet 136 of the low pressure compressor 132 to an intercooler 138 of the gas turbine engine 100. The compressed flow of air 134 may be delivered from the low pressure compressor 132 via an air outlet line 140 extending from the air outlet 136 of the low pressure compressor 132 to an air inlet 142 of the intercooler 138. The compressed flow of air 134 passes through the intercooler 140 from the air inlet 142 to an air outlet 144 thereof. A flow of cooling fluid 146 also passes through the intercooler 138 from a cooling fluid inlet 148 to a cooling fluid outlet 150 thereof. When passing through the intercooler 138, the compressed flow of air 134 and the flow of cooling fluid 146 are in heat transfer communication with one another. In this manner, the compressed flow of air 134 is cooled via the intercooler 138 and then supplied to the core engine 130 as the incoming flow of air 108.

The gas turbine engine 100 also may include a low pressure turbine 152 that receives the flow of combustion gases 122 from the high pressure turbine 126. The flow of combustion gases 122 drives the low pressure turbine 152 so as to produce mechanical work, which may drive the low pressure compressor 132 via a second shaft or low pressure rotor 154. The mechanical work produced by the low pressure turbine 152 also may drive an external load (not shown), such as an electrical generator and the like, via the low pressure rotor 154. Other configurations of the gas turbine engine 100 may be used, and the gas turbine engine 100 may include other components.

In some configurations, the gas turbine engine 100 may include one or more additional inline turbines that receive the flow of combustion gases 122. For example, an additional turbine 156 may be included downstream of and in communication with the turbine 152, as is shown via dashed lines, to receive the flow of combustion gases 122 therefrom. In this manner, the turbine 152 may be an "intermediate pressure turbine," and the turbine 156 may be a "low pressure turbine." It will be understood that the terminology for the turbines may be determined based on the relative positioning of the additional inline turbines. The intermediate pressure turbine 152 may drive the low pressure compressor 132 via the low pressure rotor 154, and the low pressure turbine 156 may drive an external load, such as an electrical generator and the like, via a third shaft or load rotor 158. Still other inline turbines may be used, according to other configurations of the gas turbine engine 100.

During operation of the gas turbine engine 100, the temperature of the incoming flow of air 108 entering the air inlet of the core engine 130 (i.e., the air inlet 110 of the high pressure compressor 104) may vary as the ambient temperature of the operating environment changes. Alternatively, the temperature of the incoming flow of air 108 may be controlled by manipulating the temperature of the flow of cooling fluid 146 entering the intercooler 138, which affects the degree of cooling provided by the intercooler 138. Although this indirect control method may be effective in some applications, it presents certain undesirable drawbacks, as described above.

The gas turbine engine 100 may use natural gas, various types of syngas, and/or other types of fuels. The gas turbine engine 100 may be any one of a number of different gas turbine engines offered by General Electric Company of Schenectady, New York, including, but not limited to, those such as a 7 or a 9 series heavy duty gas turbine engine and the like. The gas turbine engine 100 may have different configurations and may use other types of components. Other types of gas turbine engines also may be used herein. Multiple gas turbine engines, other types of turbines, and other types of power generation equipment also may be used herein together.

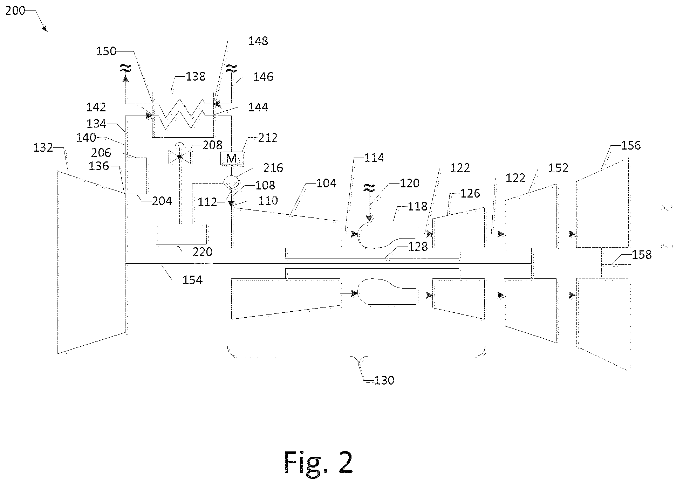

FIG. 2 shows a schematic diagram of a gas turbine engine 200 as may be described herein. The gas turbine engine 200 generally may be configured in a manner similar to the gas turbine engine 100, although certain differences in structure and function may be described herein below. As is shown, the gas turbine engine 200 may include the high pressure compressor 104, the combustor 118, and the high pressure turbine 126, which collectively form the core engine 130. The gas turbine engine 200 also may include the low pressure compressor 132, the intercooler 138, and the low pressure turbine 152. In some configurations, as described above, the turbine 152 may be an intermediate pressure turbine, and the gas turbine engine 200 may further include the low pressure turbine 156. These components generally may function in manner similar to that described above with respect to the gas turbine engine 100.

The gas turbine engine 200 may include the air outlet line 140 extending from the low pressure compressor 132 to the intercooler 138 and configured to direct a first portion of the compressed flow of air 134 to the intercooler 138 for cooling. The gas turbine engine 200 also may include a bypass air line 204, which alternatively may be referred to as an "intercooler bypass air line." The bypass air line 204 may be positioned between the low pressure compressor 132 and the high pressure compressor 104 and configured to direct a second portion of the compressed flow of air 134, which also may be referred to as a "flow of bypass air," to the air inlet line 112 without passing through the intercooler 138. In other words, the second portion of the compressed flow of air 134 bypasses the intercooler 138 and thus is not cooled.

In some embodiments, as is shown, the bypass air line 204 may extend from the air outlet 136 of the low pressure compressor 132 to an intermediate portion of the air inlet line 112 (downstream of the air outlet 144 of the intercooler 138 and upstream of the air inlet 110 of the high pressure compressor 104). In other embodiments, the bypass air line 206 may extend from an intermediate portion of the air outlet line 140 (downstream of the air outlet 136 of the low pressure compressor 132 and upstream of the air inlet 142 of the intercooler 138) to an intermediate portion of the air inlet line 112 (downstream of the air outlet 144 of the intercooler 138 and upstream of the air inlet 110 of the high pressure compressor 104), as is shown via a dashed line. Either way, the uncooled second portion of the compressed flow of air 134 joins the cooled first portion of the compressed flow of air 134 to form the incoming flow of air 108 supplied to the core engine 130.

As is shown, the gas turbine engine 200 also may include one or more valves 208 positioned on or along the bypass air line 204 and configured to control the second portion of the compressed flow of air 134. In particular, the one or more valves 208 may be selectively adjustable between an open position and a closed position, thereby providing variable control of the volumetric flow rate of the second portion of the compressed flow of air 134 passing through the bypass air line 204.

The gas turbine engine 200 further may include a fluid mixer 212 configured to mix or blend the cooled first portion of the compressed flow of air 134 and the uncooled second portion of the compressed flow of air 134 to form the incoming flow of air 108 supplied to the core engine 130. In particular, the fluid mixer 212 may be configured to substantially mix the cooled first portion of the compressed flow of air 134 and the uncooled second portion of the compressed flow of air 134 prior to entry into the core engine 130. In some embodiments, as is shown, the fluid mixer 212 may be positioned at an intersection of the bypass air line 204 and the air inlet line 112. In other embodiments, the fluid mixer 212 may be positioned downstream of the intersection of the bypass air line 204 and the air inlet line 112. Preferably, the fluid mixer 212 may be spaced a sufficient distance apart from the air inlet 110 of the high pressure compressor 104 to ensure a substantially uniform temperature distribution in the incoming flow of air 108 prior to entry into the core engine 130.

As is shown, the gas turbine engine 200 also may include a temperature sensor 216 configured to measure the temperature of the incoming flow of air 108 supplied to the core engine 130. The temperature sensor 216 may be positioned downstream of the intersection of the bypass air line 204 and the air inlet line 112. According to embodiments including the fluid mixer 212, the temperature sensor 216 may be positioned downstream of the fluid mixer 212. Preferably, the temperature sensor 216 may be spaced a sufficient distance apart from the fluid mixer 212 to ensure a substantially uniform temperature distribution in the incoming flow of air 108 prior to measurement of the temperature of the incoming flow of air 108. In some embodiments, the temperature sensor 216 may be positioned at or immediately upstream of the air inlet 110 of the high pressure compressor 104.

The gas turbine engine 200 further may include a controller 220 in operable communication with the one or more valves 208 and the temperature sensor 216, as is shown. The controller 220 may be operable to control the temperature of the incoming flow of air 108 supplied to the core engine 130. In particular, the controller 220 may be operable to adjust the state of the one or more valves 208 to a fully open position, a fully closed position, or one of a number of partially open positions, based on the temperature of the incoming flow of air 108 measured by the temperature sensor 216. Ultimately, the controller 220 may be operable to maintain the temperature of the incoming flow of air 108 at a desired level or within a desired range. In this manner, the controller 220 may be operable to prevent the core engine temperature from reaching an unacceptably high level.

During operation of the gas turbine engine 200, the controller 220 may continuously monitor the temperature of the incoming flow of air 108 as measured by the temperature sensor 216. If the temperature of the incoming flow of air 108 falls below a desired level or range, the controller 220 may cause the one or more valves 208 (or at least one of the valves 208, if multiple valves 208 are present) to move toward or to the open position, thereby increasing the volumetric flow rate of the uncooled second portion of the compressed flow of air 134 passing through the bypass air line 204. In this manner, the temperature of the incoming flow of air 108 may be increased to the desired level or within the desired range. Conversely, if the temperature of the incoming flow of air 108 rises above a desired level or range, the controller 220 may cause the one or more valves 208 (or at least one of the valves 208, if multiple valves 208 are present) to move toward or to the closed position, thereby decreasing the volumetric flow rate of the uncooled second portion of the compressed flow of air 134 passing through the bypass air line 204. In this manner, the temperature of the incoming flow of air 108 may be decreased to the desired level or within the desired range. Ultimately, the controller 220 may operate to directly control the temperature of the incoming flow of air 108 supplied to the core engine 130.

The gas turbine engine 200 and related methods described herein thus provide improved systems and methods for controlling an inlet air temperature of an intercooled gas turbine engine. As described above, the gas turbine engine 200 may include the bypass air line 204, which may be utilized in conjunction with the one or more valves 208, the temperature sensor 216, and the controller 220 to provide fast, accurate, and low-cost control of the temperature of the flow of incoming air 108 supplied to the core engine 130. In particular, as compared to existing systems and methods involving manipulation of the temperature of the flow of cooling fluid 146 entering the intercooler 138, the gas turbine engine 200 and related methods reduce product cost as well as start-up times.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

## Claims

1. An intercooled gas turbine engine (100), comprising:
a low pressure compressor (132) configured to produce a compressed flow of air (134);
an intercooler (138);
a first air line (140) positioned between the low pressure compressor (132) and the intercooler (138) and configured to direct a first portion of the compressed flow of air (134) to the intercooler (138);
a high pressure compressor (104);
a second air line (112) positioned between the intercooler (138) and the high pressure compressor (104) and configured to direct the first portion of the compressed flow of air (134) toward the high pressure compressor (104); and
a bypass air line (204,206) positioned between the low pressure compressor (132) and the high pressure compressor (104) and configured to direct a second portion of the compressed flow of air (134) to the second air line (112).

2. The intercooled gas turbine engine of claim 1, wherein the bypass air line (204) extends from an air outlet (136) of the low pressure compressor (132) to an intermediate portion of the second air line (112).

3. The intercooled gas turbine engine of claim 1, wherein the bypass air line (204) extends from an intermediate portion of the first air line (140) to an intermediate portion of the second air line (112).

4. The intercooled gas turbine engine of any of claims 1 to 3, further comprising a valve (208) positioned on or along the bypass air line (204,206) and configured to control a volumetric flow rate of the second portion of the compressed flow of air (134) therethrough.

5. The intercooled gas turbine engine of claim 4, wherein the valve (208) is selectively adjustable between an open position and a closed position to provide variable control of the volumetric flow rate of the second portion of the compressed flow of air (134).

6. The intercooled gas turbine engine of claim 4 or 5, further comprising a fluid mixer (212) positioned at or downstream of an intersection of the bypass air line (204) and the second air line (112) and configured to mix the first portion of the compressed flow of air (134) and the second portion of the compressed flow of air (134), thereby producing an incoming flow of air (108) supplied to a high pressure turbine (126).

7. The intercooled gas turbine engine of claim 6, wherein the fluid mixer (212) is spaced apart from an air inlet (110) of a high pressure compressor (104) to ensure a substantially uniform temperature distribution in the incoming flow of air (108) prior to entry into the high pressure compressor (104).

8. The intercooled gas turbine engine of claim 6 or 7, further comprising a temperature sensor (216) positioned downstream of the fluid mixer (212) and configured to measure a temperature of the incoming flow of air (108).

9. The intercooled gas turbine engine of claim 8, wherein the temperature sensor (216) is spaced apart from the fluid mixer (212) to ensure a substantially uniform temperature distribution in the incoming flow of air (108) prior to measurement of the temperature of the incoming flow of air (108).

10. The intercooled gas turbine engine of claim 8 or 9, wherein the temperature sensor (216) is positioned at an air inlet (110) of the high pressure compressor (104).

11. The intercooled gas turbine engine of any of claims 8 to 10, further comprising a controller (220) in communication with the valve (208) and the temperature sensor (212) and operable to control the temperature of the incoming flow of air (108), wherein the controller (220) is operable to adjust a state of the valve (208) based on the temperature of the incoming flow of air (108) measured by the temperature sensor (212).

12. The intercooled gas turbine engine of claim 11, wherein the controller (220) is operable to adjust the state of the valve (208) to a fully open position, a fully closed position, or one of a plurality of partially open positions, based on the temperature of the incoming flow of air (108) measured by the temperature sensor (212).

13. The intercooled gas turbine engine of any preceding claim, further comprising a combustor (118) in communication with the high pressure compressor (104), and a high pressure turbine (126) in communication with the combustor (118).

14. A method of controlling a temperature of an incoming flow of air (108) supplied to a core engine (130) of an intercooled gas turbine engine (100), the method comprising:
producing a compressed flow of air (134) with a low pressure compressor (132);
directing a first portion of the compressed flow of air (134) to an intercooler (138) for cooling therein;
directing a second portion of the compressed flow of air (134) to bypass the intercooler (138);
mixing the first portion of the compressed flow of air (134) and the second portion of the compressed flow of air (134) downstream of the intercooler (138) to form the incoming flow of air (108); and
directing the incoming flow of air (108) to the core engine (130).

15. The method of claim 14, further comprising measuring the temperature of the incoming flow of air (108), and adjusting a volumetric flow rate of the second portion of the compressed flow of air (134) based on the temperature of the incoming flow of air (108).
